# FASCICULE DE BREVET EUROPEEN

(11) **EP 3 444 050 B1**
(45) Date de publication et mention de la délivrance du brevet: **25.12.2019**
(21) Numéro de dépôt: 18178892.8
(22) Date de dépôt: 20.06.2018
(51) Int. Cl.: B22F 1/00, C04B 35/626, C04B 35/634, B33Y 70/00, B23K 26/361, C04B 35/638, B22F 3/00, B28B 1/00, B22F 3/105, B33Y 10/00, B33Y 30/00, B29C 64/165, B29C 64/171, B29C 64/188, B29C 64/194, B29C 64/106

(54) **PROCEDE ET MACHINE DE FABRICATION D'AU MOINS UNE PIECE EN AU MOINS UN MATERIAU CERAMIQUE ET/OU METALLIQUE PAR LA TECHNIQUE DES PROCEDES ADDITIFS**
VERFAHREN UND MASCHINE ZUR HERSTELLUNG VON MINDESTENS EINEM WERKSTÜCK AUS MINDESTENS EINEM KERAMIK- UND/ODER METALLWERKSTOFF MITHILFE DER TECHNIK DER ADDITIVEN FERTIGUNG
METHOD AND MACHINE FOR PRODUCING AT LEAST ONE PART IN AT LEAST ONE CERAMIC AND/OR METAL MATERIAL BY ADDITIVE MANUFACTURING

(30) Priorité: 18.08.2017 FR 1770869
(43) Date de publication de la demande: 20.02.2019
(73) Titulaire: S.A.S 3DCeram-Sinto, 87280 Limoges (FR)
(72) Inventeur: GAIGNON, Richard, 91770 Saint-Vrain (FR); CHAPUT, Christophe, 87410 Le Palais sur Vienne (FR)
(74) Mandataire: Cabinet Chaillot

(56) Documents cités:
- EP-A1- 1 911 568
- EP-A1- 3 045 148
- EP-A1- 3 085 516
- WO-A1-98/56566
- WO-A1-2015/151834
- WO-A1-2016/205690
- WO-A1-2017/108645
- DE-A1-102009 028 105
- JP-A- H1 044 248
- US-A1- 2013 193 619
- US-A1- 2015 306 664
- US-A1- 2016 325 493
- US-A1- 2017 066 186
- US-A1- 2017 072 589

## Description

La présente invention concerne un procédé et une machine de fabrication de pièces par la technique des procédés additifs.

Ces pièces sont notamment des pièces en matériau céramique ou métallique obtenues à l'état cru puis soumises à des opérations de nettoyage, déliantage et frittage pour obtenir les pièces céramiques ou métalliques finies.

La technique des procédés additifs, également appelée stéréolithographie, comprend généralement les étapes suivantes, pour l'obtention de telles pièces céramiques à l'état cru :
- on construit, par conception assistée par ordinateur, un modèle informatique de la pièce à fabriquer, modèle dont les dimensions sont plus grandes que celles de la pièce à fabriquer afin de prévoir un retrait de la céramique au cours de la fabrication de la pièce ; et
- on fabrique la pièce par la technique des procédés additifs, technique selon laquelle :
   - on forme, sur un support rigide ou sur une pièce en cours de fabrication, une première couche d'une composition photodurcissable comprenant généralement au moins une matière céramique, au moins un dispersant, au moins un monomère et/ou oligomère photodurcissable, au moins un photoinitiateur et au moins un plastifiant ;
   - on fait durcir la première couche de la composition photodurcissable, par irradiation selon un motif défini à partir du modèle pour ladite couche, formant un premier étage ;
   - on forme, sur le premier étage, une seconde couche de la composition photodurcissable ;
   - on fait durcir la seconde couche de la composition photodurcissable, par irradiation selon un motif défini pour ladite couche, formant un deuxième étage, cette irradiation s'effectuant par balayage laser de la surface libre de la composition photodurcissable étalée ou par un système de projection à diodes ;
   - optionnellement, on répète les étapes ci-dessus pour obtenir la pièce à l'état cru.

Ensuite, pour obtenir la pièce finie, on nettoie la pièce à l'état cru pour enlever la composition non durcie ; on déliante la pièce à l'état cru nettoyée ; et on fritte la pièce à l'état cru nettoyée et déliantée pour obtenir la pièce finie.

On procède de la même façon dans le cas d'un matériau métallique.

Si la fabrication de pièces simples en matériau céramique ou en matériau métallique par cette technologie est bien maîtrisée, la fabrication de pièces qui présentent une forme et/ou composition complexe présente des difficultés.

Par pièces de forme complexe, on entend notamment des pièces qui comportent des passages de géométrie tridimensionnelle, de tels passages étant difficiles à nettoyer correctement car il n'existe pas d'outils adaptés à ces géométries.

Par pièces de composition complexe, on entend notamment des pièces réalisées en plusieurs matériaux céramiques ou métalliques.

La Société déposante a découvert que l'on pouvait obtenir de telles pièces complexes en pratiquant un ou des évidements dans les couches de composition céramique ou métallique photodurcie, ces évidements étant remplis, pour compléter la couche ainsi évidée, par une composition apte à s'écouler puis à être durcie pour reformer une couche complète, sur laquelle on va venir étaler la couche suivante de composition céramique ou métallique photodurcissable.

La composition apte à s'écouler peut être une autre composition céramique ou métallique photodurcissable, ce qui permettra de former des pièces multi-matériaux, ou une matière sacrificielle durcissable, laquelle sera détruite lors du déliantage, libérant les parties creuses ou passages pratiqués dans les pièces sans avoir besoin d'y faire entrer un outil ou un produit chimique de nettoyage.

La présente invention a donc d'abord pour objet un procédé de fabrication d'au moins une pièce en au moins un matériau choisi parmi les matériaux céramiques et les matériaux métalliques par la technique des procédés additifs, ladite pièce ou lesdites pièces étant formées à l'état cru et étant amenées à être soumises ensuite à des opérations de nettoyage, déliantage et frittage, procédé suivant lequel :
(1) on construit, par conception assistée par ordinateur, un modèle informatique de la pièce à fabriquer ou des pièces à fabriquer ;
(2) sur une plate-forme de construction, on forme ladite ou lesdites pièces à fabriquer, celles-ci étant à base d'une composition photodurcissable céramique ou métallique (CPCb ou CPMb) formée :
   - d'une partie minérale consistant en au moins une matière céramique pulvérulente ou en au moins une matière métallique pulvérulente ; et
   - d'une partie organique apte à être détruite par chauffage lors du déliantage et comportant au moins un monomère et/ou oligomère photodurcissable et au moins un photoinitiateur ;
   caractérisé par le fait que :
   - on prépare au moins une matière différente de ladite CPCb ou CPMb de base, apte à s'écouler et apte à être durcie une fois écoulée, ladite matière étant une matière organique sacrificielle (MOS) apte à être détruite par chauffage lors du déliantage ou une composition céramique ou métallique supplémentaire CPCs ou CPMs ;
   - pour la construction de ladite pièce ou desdites pièces, sur la plate-forme de construction, on forme des couches successives de CPCb ou CPMb que l'on fait à chaque fois durcir par irradiation selon le motif préalablement défini à partir du modèle pour ladite couche, les étapes suivantes étant conduites pour former des parties creuses de la pièce et/ou incorporer au moins une partie en une autre matière céramique ou métallique :
      - formation par usinage d'au moins un évidement dans au moins une couche de CPCb ou CPMb durcie à partir de la surface supérieure de celle-ci ;
      - dépôt dans ledit ou lesdits évidements d'une MOS ou CPCs ou CPMs pour le ou les remplir ;
      - durcissement de la MOS ou CPCs ou CPMs placée dans ledit ou lesdits évidements pour obtenir une surface horizontale dure de même niveau que la couche de CPCb ou CPMb avoisinante,
   à chaque formation d'évidement(s), celui-ci ou ceux-ci étant délimités selon le ou les motifs préalablement définis à partir du modèle informatique, et sa ou ses profondeurs, choisies pour assurer la continuité de la pièce ou des pièces à fabriquer,
   un ou des évidements pouvant également être formés dans une partie de couche constituée par un CPCs ou CPMs pour y insérer une autre CPCs ou CPMs,
et l'on obtient, une fois l'empilement des couches durcies réalisé, une ou des pièces crues que l'on peut soumettre à un nettoyage pour enlever la ou les parties non durcies, puis à un déliantage et à un frittage.

Les matériaux céramiques sont les matériaux céramiques frittables pulvérulents choisis notamment parmi l'alumine (Al₂O₃), la zircone (ZrO₂), l'alumine renforcée par zircone, la zircone renforcée par alumine, le zircon (ZrSiO₄), la silice (SiO₂), l'hydroxyapatite, la zircon silice (ZrSiO₄ + SiO₂), le nitrure de silicium, le phosphate tricalcique (TCP), le nitrure d'aluminium, le carbure de silicium, la cordiérite et la mullite.

Les matériaux métalliques sont les matériaux métalliques frittables pulvérulents choisis parmi les métaux purs, tels que Al, Cu, Mg, Si, Ti, Zn, Sn, Ni ..., leurs alliages et les mélanges de métaux purs et de leurs alliages.

Les évidements peuvent avoir à être formés dans toute l'épaisseur d'une couche durcie de CPCb ou CPMb ou sur une hauteur inférieure à la hauteur d'une couche. Ils peuvent aussi pouvoir être formés sur une hauteur supérieure à l'épaisseur d'une couche, par exemple sur une hauteur égale à la hauteur de plusieurs couches étalées au préalable.

Lorsque la ou les pièces à construire comportent des parties creuses, celles-ci doivent déboucher à la surface extérieure pour que la MOS puisse s'évacuer lors du déliantage.

On peut utiliser une CPCb ou une CPMb de consistance pâteuse que l'on étale en couche par raclage ou une CPMb ou CPCb en suspension que l'on applique par immersion de la plate-forme dans un bain de ladite suspension pour former à chaque fois la couche de CPCb ou de CPMb à durcir, et raclage de la couche ainsi formée.

On peut utiliser, comme MOS,
- une matière photodurcissable comportant au moins un monomère et/ou oligomère photodurcissable et au moins un photoinitiateur ; ou
- une matière plastique fusible à chaud pour pouvoir s'écouler, en particulier pour pouvoir s'écouler sous pression, dans un évidement et durcissant lors du retour à la température ambiante.

De telles matières plastiques thermodurcissables sont notamment choisies parmi les copolymères acrylonitrile-butadiène-styrène (ABS), les polycarbonates (PC) + ABS, les polycarbonates PC-ISO, les polyétherimides, les polyphénylsulfones, le Nylon, l'alcool polyvinylique, le polyuréthane thermoplastique, les copolyesters, le polypropylène et l'acide polylactique.

Par compositions photodurcissables céramiques ou métalliques CPCs ou CPMs différentes de la composition respectivement CPCb ou CPMb, on entend non seulement des compositions qui sont de nature chimique différente mais encore des compositions qui peuvent être de même nature chimique mais qui peuvent avoir des propriétés physiques différentes, telles que la densité, qui ne peuvent être obtenues avec un seul système d'étalement.

Pour la formation du ou des évidements, on peut conduire un usinage mécanique. On peut également conduire un usinage laser, notamment dans des conditions de réglage de la puissance du laser entre 1 et 3 watts et de vitesse de déplacement du laser entre 1 et 100 millimètres par seconde.

Egalement, à chaque étape d'usinage, on peut souffler et on peut aspirer les débris en même temps que l'on conduit ledit usinage.

On peut appliquer la MOS ou la CPCs ou la CPMs dans le ou les évidements par une buse de distribution.

On peut conduire le durcissement par irradiation laser de chaque couche de MOS ou de CPCs ou CPMs dans les conditions d'un réglage de la puissance du laser entre 70 et 700 milliwatts et une vitesse de déplacement du laser entre 1000 et 6000 millimètres par seconde, et des couches de MOS photodurcissables placées dans les évidements.

La présent invention a également pour objet une machine de fabrication d'au moins une pièce en au moins un matériau choisi parmi les matériaux céramiques et les matériaux métalliques par le procédé utilisant la technique des procédés additifs tel que défini ci-dessus, caractérisée par le fait qu'elle comporte :
- un bâti encadrant une plate-forme de construction comportant une surface de travail ;
- des moyens d'amenée et d'étalement en couches sur la plate-forme de construction d'une composition photodurcissable céramique ou métallique de base (CPCb ou CPMb);
- des moyens d'usinage aptes à former au moins un évidement dans une couche de CPCb ou CPMb photodurcie à partir de la partie supérieure de celle-ci ;
- des moyens de soufflage et d'aspiration des débris résultant dudit usinage ;
- des moyens de remplissage du ou des évidements formés dans chaque couche de CPCb ou CPMb photodurcie pour compléter la couche ainsi évidée par une matière organique sacrificielle (MOS) ou composition photodurcissable céramique ou métallique (CPCs ou CPMs) apte à s'écouler ;
- des moyens d'irradiation situés au-dessus de la surface de travail et aptes à irradier chaque couche de CPCb ou CPMb une fois étalée pour la faire durcir et à irradier, pour la faire durcir, la MOS - lorsque celle-ci est photodurcissable -, la CPCs ou la CPMs une fois placée dans les évidements pratiqués dans des couches de CPCb ou CPMb durcie.

Une telle machine, apte à appliquer en couches une CPCb ou CPMb sous la forme d'une pâte, peut comporter un portique muni d'au moins une lame de raclage et apte à se déplacer sur le bâti au-dessus de la surface de travail de telle sorte que le bord libre de la ou des lames de raclage est apte à étaler les couches de pâte de CPCb ou CPMb sur la surface de travail,
ou la CPCb ou CPMb étant amenée par au moins une buse de distribution déplaçable devant au moins une lame de raclage qui étale la CPCb ou CPMb en une couche uniforme lors de son passage sur celle-ci.

Une telle machine, apte à appliquer en couches une CPCb ou CPMb sous la forme d'une suspension, peut comporter un bac à remplir par ladite suspension, dans lequel la plate-forme de suspension est apte à descendre pas à pas pour former sur celle-ci à chaque pas une couche à irradier, ainsi qu'un racleur (« recoater ») pour s'assurer que la suspension est distribuée sur toute la surface à irradier.

Les moyens d'amenée d'au moins une MOS ou une CPCs ou une CPMs sur la surface de travail peuvent être constitués par au moins une buse de distribution déplaçable au-dessus d'un évidement correspondant pour appliquer la composition correspondante dans celui-ci.

Conformément à un premier mode de réalisation, la ou au moins l'une des buses peut être alimentée en MOS ou CPCb ou CPMb ou CPCs ou CPMs par un tuyau flexible relié à un réservoir, en particulier un réservoir d'alimentation à piston.

Conformément à un deuxième mode de réalisation, la ou au moins l'une des buses peut être alimentée en MOS ou CPCb ou CPMb ou CPCs ou CPMs par une cartouche dont elle forme la partie supérieure, qui contient une réserve de MOS ou CPCb ou CPMb ou CPCs ou CPMs et qui est rechargeable à partir d'un réservoir d'alimentation monté ou non sur la machine ou qui est remplaçable lorsqu'elle est vide par une cartouche pleine, ce remplacement pouvant être assuré par un bras robotisé.

La ou au moins l'une des buses peut être montée déplaçable
- à l'aide d'un bras robotisé ; ou
- sur un portique qui comporte à la fois une glissière permettant de la déplacer selon l'axe horizontal x de la plate-forme de construction et une glissière permettant de la déplacer selon l'axe horizontal y de la plate-forme de construction; ou
- sur un portique muni d'au moins une lame de raclage pour permettre son déplacement selon l'axe horizontal x d'avance de la lame de raclage, ledit portique comportant également une glissière permettant de la déplacer selon l'axe horizontal y.

Pour mieux illustrer l'objet de la présente invention, on va en décrire ci-après, à titre indicatif et non limitatif, un mode de réalisation particulier avec référence au dessin annexé.

Sur ce dessin :
- la Figure 1 est une vue schématique en perspective d'une machine de fabrication d'une pièce crue en au moins deux matériaux céramiques par la technique des procédés additifs ;
- la Figure 2 est, à plus grande échelle, une vue de face du portique de déplacement des buses d'application de deux différentes compositions photodurcissables ; et
- les Figures 3 à 8 illustrent les étapes successives de la construction d'une pièce à partir de trois différentes compositions photodurcissables.

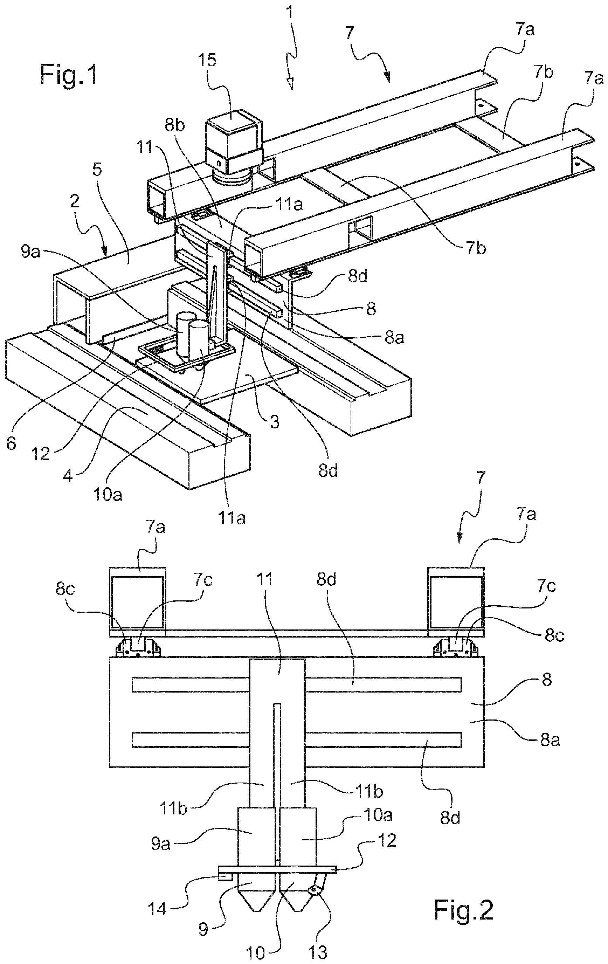

Si l'on se réfère à la Figure 1, on peut voir que l'on a représenté schématiquement une machine 1 pour la fabrication d'une pièce crue à base de trois différentes compositions photodurcissables.

La machine 1 comporte un dispositif 2 de raclage d'une couche de pâte sur une surface de travail d'une plate-forme de construction horizontale 3.

Le dispositif de raclage 2, monté coulissant sur le bâti 4 de la machine, comporte un portique 5 portant à l'avant une lame de raclage 6 ayant un bord de raclage horizontal.

La machine 1 comporte également une structure 7 qui supporte un portique 8 de déplacement de deux buses 9 et 10.

La structure 7, disposée au-dessus du dispositif de raclage 2, comporte deux longerons 7a réunis par des traverses 7b. Chaque longeron 7a porte, le long de sa face inférieure, une partie en saillie 7c (Figure 2).

Sur ces parties en saillie 7c, est monté coulissant le portique 8 de déplacement des buses 9 et 10. Le portique 8 est constitué par une plaque verticale 8a comportant, à sa partie supérieure, un retour d'équerre 8b qui comporte des éléments 8c coopérant avec les parties en saillie 7c en vue du coulissement du portique 8 sur la structure 7.

La plaque 8a comporte par ailleurs deux parties en saillie horizontales 8d sur lesquelles est monté coulissant un support vertical 11 des buses 9 et 10, celui-ci comportant, à sa partie arrière, des éléments 11a permettant ce coulissement.

Le support 11 présente, dans l'exemple représenté, deux branches 11b qui sont repliées, à leur partie inférieure, pour supporter l'une la buse 9 et l'autre, la buse 10.

Chaque buse 9, 10 est surmontée par une cartouche rechargeable respectivement 9a, 10a qui contient une réserve de composition photodurcissable.

Par ailleurs, le support 11 porte, à sa partie inférieure, un cadre horizontal 12 qui entoure les buses 9, 10 et auquel sont reliées une buse 13 de soufflage de débris ainsi qu'une buse 14 d'aspiration des débris.

Sur la Figure 1, on a également fait figurer la tête galvanométrique 15 qui oriente le faisceau laser.

On peut donc voir que le dispositif de raclage 2 est monté apte à se déplacer selon l'axe x, que le portique 8 et le support 11 sont aptes à se déplacer respectivement selon l'axe y et selon l'axe x.

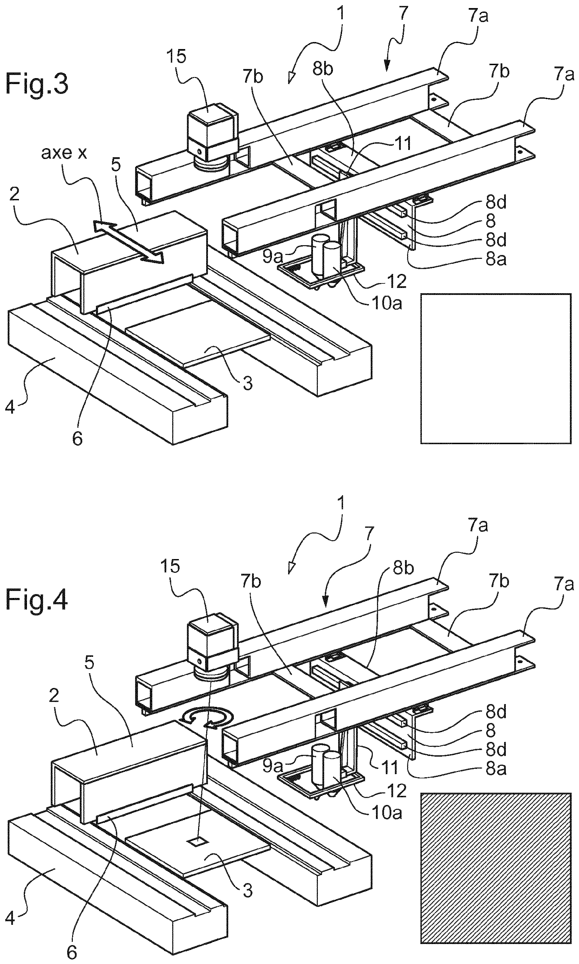

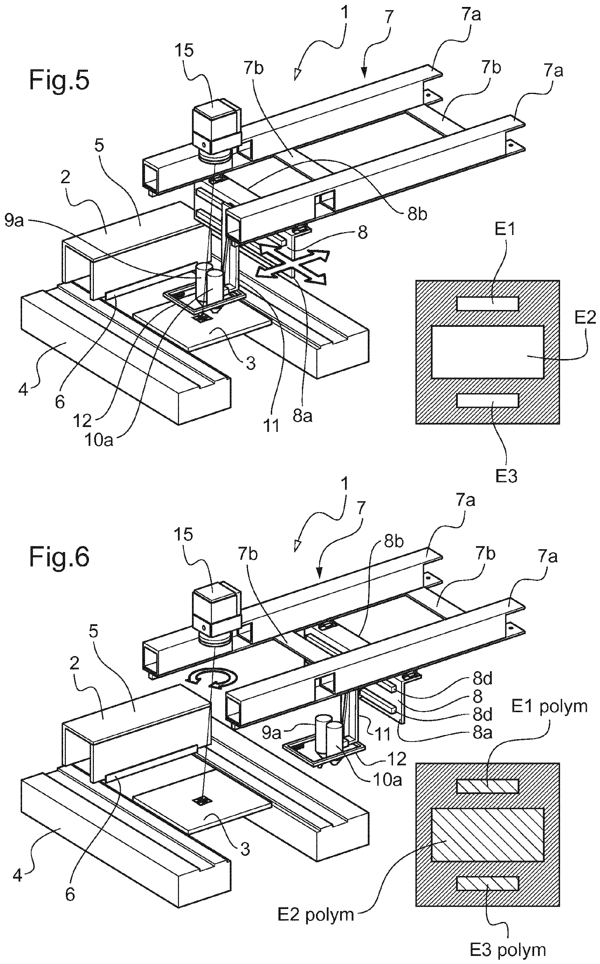

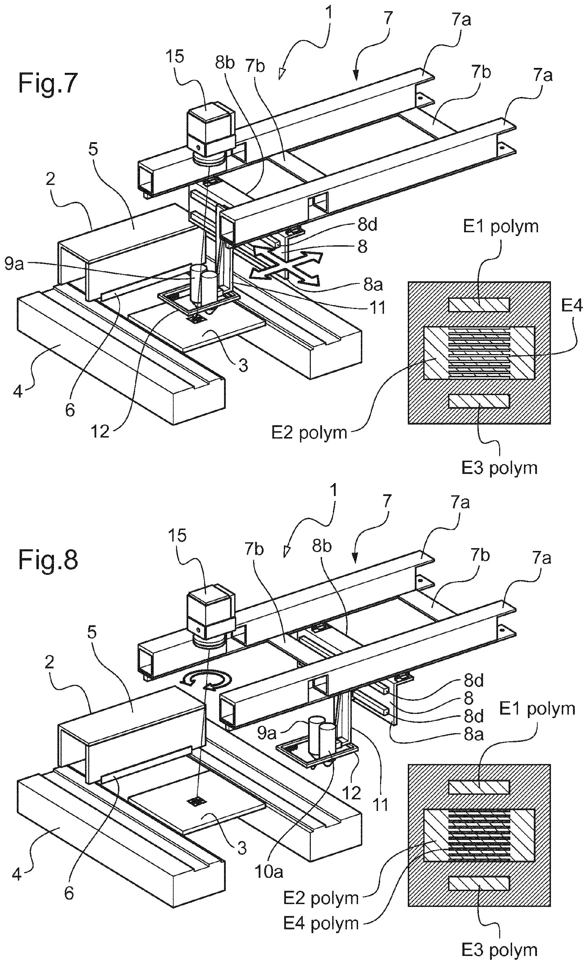

On va maintenant décrire le fonctionnement de la machine qui vient d'être décrite avec référence aux Figures 3 à 8. A chacune de ces Figures est associé un carré représentant, à plus grande échelle, la vue de dessus de la partie de la pièce en construction.

### Figure 3

On dépose une couche de pâte céramique sur la plate-forme de construction 3 à l'aide du dispositif de raclage 2, lequel se déplace selon l'axe x.

### Figure 4

On amène la couche ainsi déposée à polymériser dans la partie carrée par application du faisceau laser.

### Figure 5

On conduit un usinage au laser de la couche qui vient d'être durcie pour former dans celle-ci trois évidements E1, E2 et E3, le portique 8 se déplaçant selon l'axe y et le support 11, selon l'axe x, cette opération d'usinage laser s'effectuant avec soufflage et aspiration des débris en même temps que le lasage.

### Figure 6

A l'aide de la première buse 9, on a déposé dans les évidements E1, E2 et E3, une seconde composition photodurcissable. On la polymérise par application du faisceau laser.

### Figure 7

On conduit un usinage au laser de la couche qui vient d'être déposée dans l'évidement E2 pour y former des évidements E4, le portique 8 se déplaçant selon l'axe y et le support 11, selon l'axe x, cette opération d'usinage s'effectuant avec soufflage et aspiration des débris en même temps que le lasage.

### Figure 8

A l'aide de la deuxième buse 10, on a déposé dans les évidements E4 une troisième composition photodurcissable. On la polymérise par application du faisceau laser.

## Revendications

1. Procédé de fabrication d'au moins une pièce en au moins un matériau choisi parmi les matériaux céramiques et les matériaux métalliques par la technique des procédés additifs, ladite pièce ou lesdites pièces étant formées à l'état cru et étant amenées à être soumises ensuite à des opérations de nettoyage, déliantage et frittage, procédé suivant lequel :
(1) on construit, par conception assistée par ordinateur, un modèle informatique de la pièce à fabriquer ou des pièces à fabriquer ;
(2) sur une plate-forme de construction, on forme ladite ou lesdites pièces à fabriquer, celles-ci étant à base d'une composition photodurcissable céramique ou métallique (CPCb ou CPMb) formée :
- d'une partie minérale consistant en au moins une matière céramique pulvérulente ou en au moins une matière métallique pulvérulente ; et
- d'une partie organique apte à être détruite par chauffage lors du déliantage et comportant au moins un monomère et/ou oligomère photodurcissable et au moins un photoinitiateur ;
**caractérisé par le fait que** :
- on prépare au moins une matière différente de ladite CPCb ou CPMb de base, apte à s'écouler et apte à être durcie une fois écoulée, ladite matière étant une matière organique sacrificielle (MOS) apte à être détruite par chauffage lors du déliantage ou une composition céramique ou métallique supplémentaire CPCs ou CPMs ;
- pour la construction de ladite pièce ou desdites pièces, sur la plate-forme de construction, on forme des couches successives de CPCb ou CPMb que l'on fait à chaque fois durcir par irradiation selon le motif préalablement défini à partir du modèle pour ladite couche, les étapes suivantes étant conduites pour former des parties creuses de la pièce et/ou incorporer au moins une partie en une autre matière céramique ou métallique :
- formation par usinage d'au moins un évidement dans au moins une couche de CPCb ou CPMb durcie à partir de la surface supérieure de celle-ci ;
- dépôt dans ledit ou lesdits évidements d'une MOS ou CPCs ou CPMs pour le ou les remplir ;
- durcissement de la MOS ou CPCs ou CPMs placée dans ledit ou lesdits évidements pour obtenir une surface horizontale dure de même niveau que la couche de CPCb ou CPMb avoisinante,
à chaque formation d'évidement(s), celui-ci ou ceux-ci étant délimités selon le ou les motifs préalablement définis à partir du modèle informatique, et sa ou ses profondeurs, choisies pour assurer la continuité de la pièce ou des pièces à fabriquer,
un ou des évidements pouvant également être formés dans une partie de couche constituée par un CPCs ou CPMs pour y insérer une autre CPCs ou CPMs,
et l'on obtient, une fois l'empilement des couches durcies réalisé, une ou des pièces crues que l'on peut soumettre à un nettoyage pour enlever la ou les parties non durcies, puis à un déliantage et à un frittage.

2. Procédé selon la revendication 1, **caractérisé par le fait que** l'on utilise une CPCb ou une CPMb de consistance pâteuse que l'on étale en couche par raclage ou une CPMb ou CPCb en suspension que l'on applique par immersion de la plate-forme dans un bain de ladite suspension pour former à chaque fois la couche de CPCb ou de CPMb à durcir, et raclage de la couche ainsi formée.

3. Procédé selon l'une des revendications 1 et 2, **caractérisé par le fait que** l'on utilise, comme MOS,
- une matière photodurcissable comportant au moins un monomère et/ou oligomère photodurcissable et au moins un photoinitiateur ; ou
- une matière plastique fusible à chaud pour pouvoir s'écouler, en particulier pour pouvoir s'écouler sous pression, dans un évidement et durcissant lors du retour à la température ambiante.

4. Procédé selon l'une des revendications 1 à 3, **caractérisé par le fait que**, pour la formation du ou des évidements, on conduit un usinage mécanique.

5. Procédé selon l'une des revendications 1 à 3, **caractérisé par le fait que**, pour la formation du ou des évidements, on conduit un usinage laser, notamment dans des conditions de réglage de la puissance du laser entre 1 et 3 watts et de vitesse de déplacement du laser entre 1 et 100 millimètres par seconde.

6. Procédé selon l'une des revendications 1 à 5, **caractérisé par le fait qu'**à chaque étape d'usinage, on souffle et on aspire les débris en même temps que l'on conduit ledit usinage.

7. Procédé selon l'une des revendications 1 à 6, **caractérisé par le fait que** l'on applique la MOS ou la CPCs ou la CPMs dans le ou les évidements par une buse de distribution.

8. Procédé selon l'une des revendications 1 à 7, **caractérisé par le fait que** l'on conduit le durcissement par irradiation laser de chaque couche de MOS ou de CPCs ou CPMs dans les conditions d'un réglage de la puissance du laser entre 70 et 700 milliwatts et une vitesse de déplacement du laser entre 1000 et 6000 millimètres par seconde, et des couches de MOS photodurcissables placées dans les évidements.

9. Machine de fabrication d'au moins une pièce en au moins un matériau choisi parmi les matériaux céramiques et les matériaux métalliques par le procédé utilisant la technique des procédés additifs tel que défini à l'une des revendications 1 à 8, **caractérisée par le fait qu'**elle comporte :
- un bâti (4) encadrant une plate-forme de construction (3) comportant une surface de travail ;
- des moyens d'amenée et d'étalement en couches sur la plate-forme de construction d'une composition photodurcissable céramique ou métallique de base (CPCb ou CPMb) ;
- des moyens d'usinage aptes à former au moins un évidement dans une couche de CPCb ou CPMb photodurcie à partir de la partie supérieure de celle-ci ;
- des moyens de soufflage (13) et d'aspiration (14) des débris résultant dudit usinage ;
- des moyens de remplissage du ou des évidements formés dans chaque couche de CPCb ou CPMb photodurcie pour compléter la couche ainsi évidée par une matière organique sacrificielle (MOS) ou composition photodurcissable céramique ou métallique (CPCs ou CPMs) apte à s'écouler ;
- des moyens d'irradiation situés au-dessus de la surface de travail et aptes à irradier chaque couche de CPCb ou CPMb une fois étalée pour la faire durcir et à irradier, pour la faire durcir, la MOS - lorsque celle-ci est photodurcissable -, la CPCs ou la CPMs une fois placée dans les évidements pratiqués dans des couches de CPCb ou CPMb durcie.

10. Machine selon la revendication 9, apte à appliquer en couches une CPCb ou CPMb sous la forme d'une pâte, **caractérisée par le fait qu'**elle comporte un portique (5) muni d'au moins une lame de raclage (6) et apte à se déplacer sur le bâti (4) au-dessus de la surface de travail de telle sorte que le bord libre de la ou des lames de raclage (6) est apte à étaler les couches de pâte de CPCb ou CPMb sur la surface de travail,
ou la CPCb ou CPMb étant amenée par au moins une buse de distribution déplaçable devant au moins une lame de raclage qui étale la CPCb ou CPMb en une couche uniforme lors de son passage sur celle-ci.

11. Machine la revendication 9, apte à appliquer en couches une CPCb ou CPMb sous la forme d'une suspension, **caractérisée par le fait qu'**elle comporte un bac à remplir par ladite suspension, dans lequel la plate-forme de suspension est apte à descendre pas à pas pour former sur celle-ci à chaque pas une couche à irradier, ainsi qu'un racleur pour s'assurer que la suspension est distribuée sur toute la surface à irradier.

12. Machine selon l'une des revendications 9 à 11, **caractérisée par le fait que** les moyens d'amenée d'au moins une MOS ou une CPCs ou une CPMs sur la surface de travail sont constitués par au moins une buse de distribution (9, 10) déplaçable au-dessus d'un évidement correspondant pour appliquer la composition correspondante dans celui-ci.

13. Machine selon l'une des revendications 10 ou 12, **caractérisée par le fait que** la ou au moins l'une des buses (9, 10) est alimentée en MOS ou CPCb ou CPMb ou CPCs ou CPMs par un tuyau flexible relié à un réservoir, en particulier un réservoir d'alimentation à piston.

14. Machine selon l'une des revendications 10 ou 12, **caractérisée par le fait que** la ou au moins l'une des buses (9, 10) est alimentée en MOS ou CPCb ou CPMb ou CPCs ou CPMs par une cartouche dont elle forme la partie supérieure, qui contient une réserve de MOS ou CPCb ou CPMb ou CPCs ou CPMs et qui est rechargeable à partir d'un réservoir d'alimentation monté ou non sur la machine ou qui est remplaçable lorsqu'elle est vide par une cartouche pleine, ce remplacement pouvant être assuré par un bras robotisé.

15. Machine selon l'une des revendications 10 ou 12, **caractérisée par le fait que** la ou au moins l'une des buses (9, 10) est montée déplaçable :
- à l'aide d'un bras robotisé ; ou
- sur un portique qui comporte à la fois une glissière permettant de la déplacer selon l'axe horizontal x de la plate-forme de construction et une glissière permettant de la déplacer selon l'axe horizontal y de la plate-forme de construction; ou
- sur un portique muni d'au moins une lame de raclage pour permettre son déplacement selon l'axe horizontal x d'avance de la lame de raclage, ledit portique comportant également une glissière permettant de la déplacer selon l'axe horizontal y.

## Patentansprüche

1. Verfahren zur Herstellung mindestens eines Werkstücks aus mindestens einem Werkstoff, ausgewählt aus den Keramikwerkstoffen und den Metallwerkstoffen mit Hilfe der Technik der additiven Fertigung, wobei das Werkstück oder die Werkstücke in rohem Zustand gebildet und zugeführt werden, um dann Verfahren des Reinigens, des Entbinderns und des Sinterns unterzogen zu werden, einem Verfahren, gemäß dem:
(1) durch computergestütztes Design ein Computermodell des herzustellenden Werkstücks oder der herzustellenden Werkstücke konstruiert wird;
(2) auf einer Konstruktionsplattform das oder die herzustellende(n) Werkstück(e) gebildet werden, wobei dieselben auf der Grundlage einer photohärtbaren keramischen oder metallischden Zusammensetzung (CPCb oder CPMb) gebildet sind:
- aus einem mineralischen Teil, der aus mindestens einem pulverförmigen Keramikwerkstoff oder aus mindestens einem pulverförmigen Metallwerkstoff besteht; und
- aus einem organischen Teil, der ausgelegt ist, um bei der Entbinderung durch Erhitzen zerstört zu werden und mindestens ein photohärtbares Monomer und/oder photohärtbares Oligomer und mindestens einen Photoinitiator umfasst;
**dadurch gekennzeichnet, dass**
- mindestens ein Werkstoff hergestellt wird, der verschieden von der CPCb oder der CPMb der Basis ist, der ausgelegt ist, um abzufließen, und ausgelegt ist, um gehärtet zu werden, nachdem er abgeflossen ist, wobei der Werkstoff ein organischer Opferwerkstoff (MOS), der ausgelegt ist, um bei der Entbinderung durch Erhitzen zerstört zu werden, oder eine zusätzliche keramische oder metallische Zusammensetzung CPCs oder CPMs ist;
- für die Konstruktion des Werkstücks oder der Werkstücke auf der Konstruktionsplattform aufeinanderfolgende Schichten von CPCb oder CPMb gebildet werden, die jedes Mal durch Strahlung gemäß dem Muster gehärtet werden, das im Voraus ausgehend vom Modell für die Schicht definiert wurde, wobei die folgenden Schritte durchgeführt werden, um hohle Teile des Werkstücks zu bilden und/oder mindestens einen Teil aus einem anderen Keramik- oder Metallwerkstoff einzuschließen;
- Bilden durch Bearbeiten mindestens einer Aussparung in mindestens einer ausgehärteten Schicht von CPCb oder CPMb ausgehend von der oberen Fläche derselben;
- Ablagern in der oder den Aussparungen von einem MOS oder einer CPCs oder CPMs, um sie zu füllen;
- Härten des MOS oder der CPCs oder CPMs, der/die in der oder den Aussparung(en) platziert wurde, um eine harte horizontale Fläche auf der gleichen Ebene wie die benachbarte Schicht von CPCb oder CPMb zu erhalten,
wobei an jeder Bildung von Aussparung(en) diese gemäß dem oder den oben im Voraus definierten Mustern ausgehend vom Computermodell und ihrer oder ihren Tiefe(n), ausgewählt, um die Kontinuität des herzustellenden Werkstücks oder der herzustellenden Werkstücke sicherzustellen, begrenzt ist/sind,
oder eine der Aussparungen auch in einem Teil der Schicht gebildet sein kann, der aus einer CPCs oder CPMs gebildet ist, um dort eine andere CPCs oder CPMs einzuführen,
und, nachdem die Stapelung der gehärteten Schichten durchgeführt wurde, ein oder mehrere rohe Werkstücke, die einer Reinigung, um den oder die nicht gehärteten Teile zu entfernen, dann einer Entbinderung und einer Sinterung unterzogen werden können, erhalten werden.

2. Verfahren nach Anspruch 1, **dadurch gekennzeichnet, dass** eine CPCb oder eine CPMb mit pastöser Konsistenz verwendet wird, die durch Schaben zu einer Schicht ausgebreitet wird, oder eine CPMb oder CPCb in Suspension, die durch Immersion der Plattform in ein Bad der Suspension angewendet wird, um jedes Mal die zu härtende Schicht von CPCb oder von CPMb zu bilden, und Schaben der so gebildeten Schicht.

3. Verfahren nach einem der Ansprüche 1 und 2, **dadurch gekennzeichnet, dass** als MOS verwendet wird
- ein photohärtbarer Werkstoff, umfassend mindestens ein photohärtbares Monomer und/oder Oligomer und mindestens einen Photoinitiator; oder
- ein Kunststoffwerkstoff, der heißschmelzbar ist, um insbesondere unter Druck in eine Aussparung abfließen zu können und bei der Rückkehr zur Umgebungstemperatur zu härten.

4. Verfahren nach einem der Ansprüche 1 bis 3, **dadurch gekennzeichnet, dass** für die Bildung der Aussparung(en) eine mechanische Bearbeitung durchgeführt wird.

5. Verfahren nach einem der Ansprüche 1 bis 3, **dadurch gekennzeichnet, dass** für die Bildung der Aussparung(en) eine Laserbearbeitung durchgeführt wird, insbesondere unter Bedingungen der Einstellung der Leistung des Lasers zwischen 1 und 3 Watt und der Geschwindigkeit der Verschiebung des Lasers zwischen 1 und 100 Millimeter pro Sekunde.

6. Verfahren nach einem der Ansprüche 1 bis 5, **dadurch gekennzeichnet, dass** bei jedem Schritt des Bearbeitens geblasen und die Rückstände zur gleichen Zeit angesaugt werden, wie die Bearbeitung durchgeführt wird.

7. Verfahren nach einem der Ansprüche 1 bis 6, **dadurch gekennzeichnet, dass** der MOS oder die CPSs oder die CPMs in der oder den Aussparung(en) durch eine Verteilungsdüse angewendet wird.

8. Verfahren nach einem der Ansprüche 1 bis 7, **dadurch gekennzeichnet, dass** das Härten durch Laserbestrahlung jeder Schicht von MOS oder von CPCs oder CPMs unter den Bedingungen einer Einstellung der Leistung des Lasers zwischen 70 und 700 Milliwatt und einer Geschwindigkeit der Verschiebung des Lasers zwischen 1000 und 6000 Millimeter pro Sekunde und Schichten von photohärtbarem MOS, die in den Aussparungen platziert sind, durchgeführt wird.

9. Maschine zur Herstellung mindestens eines Werkstücks aus mindestens einem Werkstoff, ausgewählt aus den Keramikwerkstoffen und den Metallwerkstoffen durch das Verfahren, dass die Technik der additiven Fertigung verwendet, wie in einem der Ansprüche 1 bis 8 definiert, **dadurch gekennzeichnet, dass** sie Folgendes umfasst:
- einen Rahmen (4), der eine Konstruktionsplattform (3) einschließt, umfassend eine Arbeitsfläche;
- Mittel zum Zuführen und Ausbreiten in Schichten auf der Konstruktionsplattform einer photohärtbarem keramischen- oder metallischen Zusammensetzung der Basis (CPCb oder CPMb);
- Verarbeitungsmittel, die ausgelegt sind, um mindestens eine Aussparung in einer ausgehärteten Schicht von CPCb oder CPMb ausgehend vom oberen Teil derselben zu bilden;
- Mittel zum Blasen (13) und Ansaugen (14) der Rückstände, die sich von der Bearbeitung ergeben;
- Mittel zum Füllen der Aussparungen(en), die in jeder photogehärteten Schicht von CPCb oder CPMb gebildet sind, um die so ausgesparte Schicht durch einen organischen Opferwerkstoff (MOS) oder eine photohärtbare keramische oder metallische Zusammensetzung (CPCs oder CPMs) zu vervollständigen, die ausgelegt ist, um abzufließen,
- Bestrahlungsmittel, die sich über der Arbeitsfläche befinden und ausgelegt sind, um jede Schicht von CPCb oder CPMb zu bestrahlen, nachdem sie ausgebreitet wurde, um sie härten zu lassen, und zu bestrahlen, um sie, den MOS - wenn dieser photohärtbar ist -, die CPCs oder die CPMs, nachdem sie in die Aussparungen platziert wurden, die in den Schichten von ausgehärtetem CPCb oder CPMb angebracht sind, härten zu lassen.

10. Maschine nach Anspruch 9, die ausgelegt ist, um in Schichten eine CPCb oder CPMb in Form einer Paste anzuwenden, **dadurch gekennzeichnet, dass** sie ein Gestell (5) umfasst, das mit mindestens einer Schableiste (6) ausgestattet und ausgelegt ist, um sich auf dem Gestell (4) über der Arbeitsfläche derart zu verschieben, dass der freie Rand der Schableiste (n) (6) ausgelegt ist, um die Schichten aus Paste von CPCb oder CPMb auf der Arbeitsfläche zu verteilen,
oder wobei die CPCb oder CPMb durch mindestens eine Verteilungsdüse zugeführt wird, die vor mindestens einer Schableiste verschoben werden kann, die die CPCb oder CPMb bei ihrem Durchgang durch dieselbe in eine gleichförmige Schicht ausbreitet,

11. Maschine nach Anspruch 9, die ausgelegt ist, um in Schichten eine CPCb oder CPMb in Form einer Suspension anzuwenden, **dadurch gekennzeichnet, dass** sie einen von der Suspension zu füllenden Behälter umfasst, wobei die Plattform aus Suspension ausgelegt ist, um sich Schritt für Schritt zu senken, um auf derselben bei jedem Schritt eine zu bestrahlende Schicht zu bilden, ebenso wie ein Rakel, um sicherzustellen, dass die Suspension auf der gesamten zu bestahlenden Oberfläche verteilt ist.

12. Maschine nach einem der Ansprüche 9 bis 11, **dadurch gekennzeichnet, dass** die Mittel zum Zuführen mindestens eines MOS oder einer CPCs oder einer CPMs auf die Arbeitsfläche aus mindestens einer Verteilungsdüse (9, 10) bestehen, die über einer entsprechenden Aussparung verschoben werden kann, um die entsprechende Zusammensetzung in derselben anzuwenden.

13. Maschine nach einem der Ansprüche 10 oder 12, **dadurch gekennzeichnet, dass** die oder mindestens eine der Düsen (9, 10) mit MOS oder CPCb oder CPMb oder CPCs oder CPMs durch einen flexiblen Schlauch versorgt wird, der mit einem Behälter verbunden ist, insbesondere einem Versorgungsbehälter mit Kolben.

14. Maschine nach einem der Ansprüche 10 oder 12, **dadurch gekennzeichnet, dass** die oder mindestens eine der Düsen (9, 10) mit MOS oder CPCb oder CPMb oder CPCs oder CPMs durch eine Patrone versorgt wird, von der sie den oberen Teil bildet, der eine Reserve von MOS oder CPCb oder CPMb oder CPCs oder CPMs enthält, und die ausgehend von einem Versorgungsbehälter aufladbar ist, die auf der Maschine montiert ist oder nicht, oder die, wenn sie leer ist, durch eine volle Patrone ersetzt werden kann, wobei dieser Ersatz durch einen Roboterarm sichergestellt werden kann.

15. Maschine nach einem der Ansprüche 10 oder 12, **dadurch gekennzeichnet, dass** die oder mindestens eine der Düsen (9, 10) verschiebbar montiert ist:
- mit Hilfe eines Roboterarms; oder
- auf einem Gestell, das gleichzeitig eine Gleitschiene umfasst, die ermöglicht, es entlang der horizontalen Achse x der Konstruktionsplattform zu verschieben, und eine Gleitschiene, die ermöglicht es entlang der horizontalen Achse y der Konstruktionsplattform zu verschieben; oder
- auf einem Gestell, das mit mindestens einer Schableiste ausgestattet ist, um seine Verschiebung entlang der horizontalen Achse x des Vorschubs der Schableiste zu ermöglichen, wobei das Gestell auch eine Gleitschiene umfasst, die ermöglicht, es gemäß der horizontalen Achse y zu verschieben.

## Claims

1. A method for manufacturing at least one piece made of at least one material selected among the ceramic materials and the metallic materials by the technique of additive manufacturing, said at least one piece being formed in the green state and then being caused to be subjected to cleaning, debinding and sintering operations, said method comprising the following steps:
(1) building, by a computer-aided design, a computer model of the at least one piece to be manufactured;
(2) forming, on a working tray, said at least one piece to be manufactured, which is based on a ceramic or metallic photocurable composition (CPCb or MPCb) comprising:
- a mineral part consisting of at least one powdered ceramic material or of at least one powdered metallic material; and
- an organic part able to be destroyed by heating during the debinding and comprising at least one photocurable monomer and/or oligomer and at least one photoinitiator;
**characterised in that**:
- at least one material different from said basic CPCb or MPCb, able to flow and to be cured once flowed, is prepared, said material being a sacrificial organic material (SOM) able to be destroyed by heating during the debinding process or an additional ceramic or metallic composition CPCa or MPCa;
- for the building of said at least one piece, on the working tray, successive CPCb or MPCb layers are formed, which are each time caused to be cured by irradiation according to the pattern previously defined from the model for said layer, the following steps being carried out to form hollow parts of the piece and/or to insert at least one part made of another ceramic or metallic material:
- forming, by machining, at least one recess in at least one cured CPCb or MPCb layer from the upper surface thereof;
- depositing in said at least one recess a SOM or CPCa or MPCa in order to fill it/them;
- curing the SOM or CPCa or MPCa placed in said at least one recess in order to obtain a hard horizontal surface at the same level as the nearby CPCb or MPCb layer,
each time one or more recesses is or are formed, this/these one(s) being defined according to the at least one pattern previously defined from the computer model, and its (their) depth(s) being selected to ensure the continuity of the at least one piece to be manufactured, one or more recesses being also able to be formed in a part of the layer made of a CPCa or MPCa in order to insert another CPCa or MPCa thereinto,
and, once the cured layers are stacked up, one or more green pieces are obtained, which can be subjected to a cleaning operation in order to remove the at least one uncured parts, then to a debinding operation and to a sintering operation.

2. The method according to claim 1, **characterised in that** a CPCb or a MPCb having a pasty consistency which is spread in layers by scraping, or a suspended CPCb or MPCb which is applied by dipping the tray into a bath of said suspension so as to each time form the CPCb or MPCb layer to be cured, and by scraping the layer thus formed, is used.

3. The method according to one of claims 1 and 2, **characterised in that**, as a SOM,
- a photocurable material comprising at least one photocurable monomer and/or oligomer and at least one photoinitiator; or
- a plastic material which is thermofusible in order to be flowable, particularly to be flowable under pressure, in a recess and to be cured when returning to room temperature,
is used.

4. The method according to one of claims 1 to 3, **characterised in that**, for the forming of the at least one recess, a mechanical machining is carried out.

5. The method according to one of claims 1 to 3, **characterised in that**, for the forming of the at least one recess, a laser machining is carried out, especially under the conditions of setting the laser power between 1 and 3 watts and the laser displacement speed between 1 and 100 millimetres per second.

6. The method according to one of claims 1 to 5, **characterised in that**, at each machining step, the debris are blown and sucked at the same time as said machining is carried out.

7. The method according to one of claims 1 to 6, **characterised in that** the SOM or the CPCa or the MPCa is applied in the at least one recess by a dispensing nozzle.

8. The method according to one of claims 1 to 7, **characterised in that** the curing is carried out by laser irradiating of each SOM or CPCa or MPCa layer under the conditions of setting the laser power between 70 and 700 milliwatts and a laser displacement speed between 1,000 and 6,000 millimetres per second, and of photocurable SOM layers placed in the recesses.

9. A machine for manufacturing at least one piece made of at least one material selected among the ceramic materials and the metallic materials by the method using the technique of additive manufacturing as defined in one of claims 1 to 8, **characterised in that** it comprises:
- a frame (4) surrounding a working tray (3) comprising a working surface;
- means for supplying and spreading in layers, on the working tray, a basic ceramic or metallic photocurable composition (CPCb or MPCb);
- machining means able to form at least one recess in a photocured CPCb or MPCb layer from the upper part thereof;
- means for blowing (13) and sucking (14) the debris resulting from said machining;
- means for filling the at least one recess formed in each layer of photocured CPCb or MPCb in order to complete the layer thus provided with recess(es) by a sacrificial organic material (SOM) or a ceramic or metallic photocurable composition (CPCa or MPCa) able to flow;
- irradiation means arranged above the working surface and able to irradiate, in order to cure it, each layer of CPCb or MPCb once spread, and to irradiate, in order to cure it, the SOM - when this one is photocurable -, the CPCa or the MPCa once located in the recesses made in layers of cured CPCb or MPCb.

10. The machine according to claim 9, able to apply in layers a CPCb or MPCb under the form of a paste, **characterised in that** it comprises a gantry (5) provided with at least one scraping blade (6) and able to move onto the frame (4) above the working surface such that the free edge of the at least one scraping blade (6) is able to spread the layers of CPCb or MPCb paste on the working surface,
or the CPCb or MPCb being supplied by at least one dispensing nozzle moveable in front of at least one scraping blade which spreads the CPCb or MPCb into an uniform layer when passing thereon.

11. The machine according to claim 9, able to apply in layers a CPCb or MPCb under the form of a suspension, **characterised in that** it comprises a tank to be filled with said suspension, in which the working tray is able to be lowered step by step in order to form thereon, at each step, a layer to be irradiated, as well as a recoater in order to ensure that the suspension is dispensed on the entire surface to be irradiated.

12. The machine according to one of claims 9 to 11, **characterised in that** the means for supplying at least one SOM or CPCa or MPCa onto the working surface are constituted by at least one dispensing nozzle (9, 10) moveable above a corresponding recess in order to apply the corresponding composition therein.

13. The machine according to one of claims 10 or 12, **characterised in that** the or at least one of the nozzles (9, 10) is supplied with SOM or CPCb or MPCb or CPCa or MPCa by a hose connected to a tank, in particular a piston supply tank.

14. The machine according to one of claims 10 or 12, **characterised in that** the or at least one of the nozzles (9, 10) is supplied with SOM or CPCb or MPCb or CPCa or MPCa by a cartridge which forms the upper part of it, which contains a stock of SOM or CPCb or MPCb or CPCa or MPCa and which is refillable from a supply tank that is be mounted or not on the machine, or which, when empty, is replaceable by a full cartridge, wherein this replacement can be ensured by a robotic arm.

15. The machine according to one of claims 10 or 12, **characterised in that** the or at least one of the nozzles (9, 10) is moveably mounted:
- using a robotic arm; or
- on a gantry which has both a slide allowing to move it along the horizontal axis x of the working tray and a slide allowing to move it along the horizontal axis y of the working tray; or
- on a gantry having at least one scraping blade in order to allow the displacement thereof along the horizontal advance axis x of the scraping blade, said gantry also comprising a slide allowing to move it along the horizontal axis y.
